# EUROPÄISCHE PATENTSCHRIFT

(11) **EP 0 561 028 B1**
(45) Veröffentlichungstag und Bekanntmachung des Hinweises auf die Patenterteilung: **04.06.1997**
(21) Anmeldenummer: 92104813.8
(22) Anmeldetag: 19.03.1992
(51) Int. Cl.: H04N 7/087, H04N 5/445

(54) **Verfahren zum Darstellen von Textseiten auf dem Bildschirm eines Fernsehgeräts**
Procedure for the display of text pages on a television screen
Procédé pour l'affichage des pages de texte sur l'écran d'un poste de télévision

(43) Veröffentlichungstag der Anmeldung: 22.09.1993
(73) Patentinhaber: SIEMENS AKTIENGESELLSCHAFT, 80333 München (DE)
(72) Erfinder: Mirthes, Reinhard, Dipl.-Ing. (TU), W-8901 Eurasburg (DE)

(56) Entgegenhaltungen:
- DE-A- 3 923 907
- DE-C- 4 031 213
- GB-A- 2 217 144

## Beschreibung

Die Erfindung betrifft ein Verfahren zum Darstellen von zwei Textseiten auf dem Bildschirm eines Fernsehgeräts mittels eines im Fernsehgerät oder in einem an das Fernsehgerät angeschlossenen Videorekorder enthaltenen Teletextdecoders, bei dem die Textseiten gleichzeitig auf dem Bildschirm darstellt werden.

Beim Betrachten von Teletextseiten kommt es häufig vor, daß der Betrachter aus einer Seite mit einem Inhaltsverzeichnis, die beispielsweise der von einem Sender abgestrahlten Index-Seiten oder einer von einem Steuerrechner des Fernsehgeräts oder des daran angeschlossenen Videorekorders erzeugten Liste anwählbarer Seiten entnommen wurde, eine bestimmte Teletextseite auswählen und betrachten möchte, um anschließend wieder zur Darstellung der Inhaltsverzeichnisseite zurückzukehren und eine weitere Teletextseite daraus auszuwählen. Dazu muß der Betrachter jeweils bestimmte Tastenbetätigungen bei seiner Bedieneinheit vornehmen, um von der Inhaltsverzeichnisdarstellung zur Teletextseitendarstellung und umgekehrt zu gelangen.

In der DE-C-40 31 213 ist ein Verfahren zum übertragen und Wiedergeben von Teletextseiten beschrieben, bei dem zwei Seiten gleichzeitig sichtbar nebeneinander an einem Bildschirm dargestellt werden. Der Bilschirm weist das Seiten-Höhen-Format 16:9 auf. Die erste der dargestellten Teletextseiten wird im Format 4:3 angezeigt. Der verbleibende Rest wird mit Zeichen einer Ergänzungsseite aufgefüllt, die dem Bildflächenunterschied zwischen dem 16:9- und dem 4:3-Format entspricht.

In der GB-A-2 217 144 ist ein Fernsehempfänger mit Teletextempfanqsmöglichkeit beschrieben, bei dem unter anderem zwei Teletextseiten nebeneinander dargestellt werden. Hierzu werden die Teletextseiten verkleinert, indem Bildpunkte weggelassen werden. Dadurch geht Bildinformation verloren.

Bei bisher bekannten Verfahren ist es beispielsweise auch möglich, auf der Inhaltsverzeichnisseite mittels eines Markers eine ausgewählte Teletextseite zu kennzeichnen, um dann durch eine Tastenbetätigung diese Teletextseite zur Darstellung zu bringen. Um eine weitere Teletextseite anzuschauen, muß allerdings wieder zur Inhaltsverzeichnisliste zurückgekehrt werden und dann das Verfahren wiederholt werden.

Der Erfindung liegt das Problem zugrunde, ein Verfahren der eingangs genannten Art anzugeben, bei dem auf dem Bildschirm die Information zweier Teletextseiten vollständig darstellbar ist.

Das Problem wird dadurch gelöst, daß durch Veränderung der Bildpunktfrequenz des Teletextdecoders die Breite einer Textseite derart eingestellt wird, daß die zwei Textseiten nebeneinander auf dem Bildschirm dargestellt werden.

Teletextdecoder der neuen Generation bieten die Möglichkeit, die Bildpunktfrequenz bei der Darstellung von Textseiten so einzustellen, daß die Breite der dargestellten Textinformation innerhalb eines sinnvollen Rahmens veränderbar ist. Das ist besonders bei sogenannten "HDTV"-Fernsehgeräten, die ein 16:9-Bildformat haben, notwendig, um eine unverzerrte Textdarstellung zu erreichen. Bei Verkleinerung der Breite wird ein zusätzlicher Bereich frei, der nun zur erfindungsgemäßen Darstellung weiterer Informationen genutzt werden kann. Diese zusätzliche Information kann dabei sowohl eine mit dem Teletextprogramm empfangene Indexseite, wie sie vom Sender abgestrahlt wird, oder eine von einem Fernsehgerät oder im daran angeschlossenen Videorekorder enthaltenen Steuerrechner ermittelte Liste anwählbarer Seiten sein. Es ist aber auch möglich, gleichzeitig zwei Teletextseiten darzustellen.

In einer vorteilhaften Anwendung des Verfahrens ist es möglich, mittels eines Markers eine bestimmte Teletextseite auf der Indexseite oder in der vom Steuerrechner ermittelten Liste anwählbarer Seiten zu kennzeichnen und dann neben der Indexseite oder der Liste anwählbarer Seiten zur Darstellung zu bringen.

Das erfindungsgemäße Verfahren ist vor allem bei Fernsehgeräten mit einem 16:9-Bildformat von Vorteil, da hier mehr Platz zur Darstellung von Textinformation zur Verfügung steht, als bei herkömmlichen Geräten mit einem 4:3-Format-Bildschirm. Jedoch ist das Verfahren auch bei solchen Geräten anwendbar, allerdings erscheinen die Textseiten dann in horizontaler Richtung etwas gestaucht.

## Patentansprüche

1. Verfahren zum Darstellen von zwei Textseiten auf einem Bildschirm eines Fernsehgeräts mittels eines im Fernsehgerät oder in einem an das Fernsehgerät angeschlossenen Videorekorder enthaltenen Teletextdecoders, bei dem die Textseiten gleichzeitig auf dem Bildschirm dargestellt werden,
**dadurch gekennzeichnet,** daß
durch Veränderung der Bildpunktfrequenz des Teletextdecoders die Breite der Textseiten derart eingestellt wird, daß die zwei Textseiten nebeneinander auf dem Bildschirm dargestellt werden.

2. Verfahren nach Anspruch 1,
**dadurch gekennzeichnet,**
daß eine der beiden dargestellten Textseiten eine mit dem Teletextprogramm empfangene Indexseite ist.

3. Verfahren nach Anspruch 1,
**dadurch gekennzeichnet,**
daß eine der beiden dargestellten Textseiten eine von einem im Fernsehgerät oder im Videorekorder enthaltenen Steuerrechner ermittelte Liste anwählbarer Seiten ist.

4. Verfahren nach Anspruch 1,
**dadurch gekennzeichnet,**
daß beide dargestellten Textseiten Teletextseiten sind.

5. Verfahren nach einem der Ansprüche 2 oder 3,
**dadurch gekennzeichnet**,
daß mittels eines Markers eine der in der Indexseite oder in der mittels des Steuerrechners ermittelten Liste anwählbarer Seiten enthaltende Seite ausgewählt und dann als zweite Textseite dargestellt wird.

## Claims

1. Method for displaying two text pages on a screen of a television set by means of a teletext decoder contained in the television set or in a video recorder connected to the television set, in which the text pages are displayed simultaneously on the screen, characterized in that by changing the pixel frequency of the teletext decoder, the width of the text pages is adjusted in such a way that the two text pages are displayed next to one another on the screen.

2. Method according to Claim 1, characterized in that one of the two text pages displayed is an index page received with the teletext programme.

3. Method according to Claim 1, characterized in that one of the two text pages displayed is a list of selectable pages which is determined by a control computer contained in the television set or in the video recorder.

4. Method according to Claim 1, characterized in that both text pages displayed are teletext pages.

5. Method according to either of Claims 2 and 3, characterized in that, by means of a marker, one of the pages contained in the index page or in the list of selectable pages which is determined by means of the control computer is selected and is then displayed as the second text page.

## Revendications

1. Procédé d'affichage de deux pages de texte sur un écran d'un poste de télévision au moyen d'un décodeur de télétexte contenu dans le poste de télévision ou dans un magnétoscope raccordé au poste de télévision, dans lequel on affiche les pages de texte en même temps à l'écran, caractérisé en que, en faisant varier la fréquence de points d'image du décodeur de télétexte, on règle la largeur des pages de texte de manière à afficher les deux pages de texte côte-à-côte à l'écran.

2. Procédé suivant la revendication 1, caractérisé en ce que l'une des deux pages de texte affichées est une page d'index reçue avec le programme de télétexte.

3. Procédé suivant la revendication 1, caractérisé en ce que l'une des deux pages de texte affichées est une liste de pages pouvant être sélectionnées déterminée par un calculateur de commande contenu dans le poste de télévision ou dans le magnétoscope.

4. Procédé suivant la revendication 1, caractérisé en ce que les deux pages de texte affichées sont des pages de télétexte.

5. Procédé suivant l'une des revendications 2 ou 3, caractérisé en ce que l'on sélectionne au moyen d'un repère une page contenue dans la page d'index ou dans la liste de pages pouvant être sélectionnées déterminée au moyen du calculateur de commande et en ce qu'on l'affiche comme deuxième page de texte.
